**Europäisches Patentamt**

**European Patent Office**

**Office européen des brevets**

(19)

(11) **EP 1 457 266 B1**

(12) **EUROPÄISCHE PATENTSCHRIFT**

(45) Veröffentlichungstag und Bekanntmachung des Hinweises auf die Patenterteilung:
**07.12.2005 Patentblatt 2005/49**

(51) Int Cl.⁷: **B05D 7/00**, B05D 3/12, C09D 183/04

(21) Anmeldenummer: **04405138.1**

(22) Anmeldetag: **09.03.2004**

(54) **Verfahren zur Herstellung umgeformter Aluminium-Blechteile mit dekorativer Oberfläche**

Method for manufacturing of formed metal parts of aluminium sheet with a decorative surface

Procédé de fabrication de pièces de tôle d'aluminium formées avec une surface décorative

(84) Benannte Vertragsstaaten:
**BE CH CZ DE ES FR GB HU IE IT LI NL PL PT SE SI SK**

(30) Priorität: **12.03.2003 EP 03405173**

(43) Veröffentlichungstag der Anmeldung:
**15.09.2004 Patentblatt 2004/38**

(73) Patentinhaber: **Alcan Technology & Management Ltd.**
**8212 Neuhausen am Rheinfall (CH)**

(72) Erfinder:
• **Hotz, Walter**
**8222 Beringen (CH)**
• **Gillich, Volkmar**
**8212 Neuhausen (CH)**
• **Fuchs, Roman**
**8212 Neuhausen (CH)**

(56) Entgegenhaltungen:
**EP-A- 1 154 289**        **WO-A-00/29784**
**CH-A- 691 064**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Herstellung witterungs- und korrosionsbeständiger umgeformter Blechteile aus Aluminium oder aus einer Aluminiumlegierung mit dekorativer Oberfläche.

Bei der Herstellung von dekorativen Umformteilen aus Aluminiumblech, wie z.B. Zierleisten, werden die Teile in herkömmlichen Verfahren zunächst aus einem Band ausgestanzt und umgeformt. Die Vorbehandlung und das Aufbringen weiterer Oberflächenschichten wird an den bereits umgeformten Teilen durchgeführt. Diese Verfahrensweise ist sehr aufwendig und mit einem komplexen Handling verbunden, da die in verschiedenen Bädern zu behandelnden Blechteile auf Halter aufgesteckt und oft auch von einem Halter auf einen anderen umgesteckt werden müssen.

Aus der EP-A-1 154 289 und der WO-A-00/29784 sind Coil-Coating-Verfahren zur Herstellung von Reflektorblechen aus Aluminium oder aus einer Aluminiumlegierung bekannt. Die Schutzschicht auf den mit diesen Verfahren hergestellten Reflektorblechen neigt jedoch beim Umformen der Bleche zu Rissbildung, so dass die Witterungs- und Korrosionsbeständigkeit der umgeformten Blechteile nicht mehr gewährleistet ist.

Der Erfindung liegt die Aufgabe zugrunde, ein Verfahren zur Herstellung umgeformter Blechteile aus Aluminium oder aus einer Aluminiumlegierung mit dekorativer Oberfläche unter Anwendung eines Coil-Coating-Verfahrens mit gegenüber bekannten Verfahren verbesserter Witterungs- und Korrosionsbeständigkeit zu schaffen.

Zur erfindungsgemässen Lösung der Aufgabe führt ein Verfahren, das nacheinander die folgenden Schritte umfasst:

- Bereitstellen eines Bandes aus Aluminium oder aus einer Aluminiumlegierung,
- gegebenenfalls kontinuierliches Entfetten des Bandes,
- gegebenenfalls elektrochemisches, chemisches oder mechanisches Glänzen des gegebenenfalls entfetteten Bandes,
- kontinuierliche Vorbehandlung des gegebenenfalls entfetteten und/oder geglänzten Bandes zur Erzeugung einer als Haftgrund für eine Lackschicht geeigneten Vorbehandlungsschicht,
- kontinuierliches Lackieren des vorbehandelten Bandes mit einem Sol-Gel-Lack aus einem Polysiloxan zur Erzeugung einer ersten Schutzschicht,
- kontinuierliches Trocknen und Härten der ersten Schutzschicht in einem Durchlaufofen,
- Fertigung der Blechteile durch

    a. Umformen des mit der ersten Schutzschicht versehenen Bandes und Ablängen der gegebenenfalls weiter umzuformenden Blechteile oder

    b. Schneiden der Blechteile aus dem mit der ersten Schutzschicht versehenen Band und Umformen der ausgeschnittenen Blechteile,

- Lackieren der umgeformten Blechteile mit einem Sol-Gel-Lack aus einem Polysiloxan zur Erzeugung einer zweiten Schutzschicht,
- Trocknen und Härten der zweiten Schutzschicht in einem Ofen.

Die Schichtdicke des ausgehärteten Sol-Gel-Lackes der ersten Schutzschicht beträgt bevorzugt wenigstens 1 µm und liegt vorzugsweise zwischen 1 und 4,5 µm, insbesondere zwischen 1 und 3 µm. Enthält der Sol-Gel-Lack zusätzlich noch Farbpigmente, kann die Schichtdicke bis 10 µm betragen.

Die Schichtdicke des ausgehärteten Sol-Gel-Lackes der zweiten Schutzschicht beträgt bevorzugt wenigstens 0,5 µm und liegt vorzugsweise zwischen 1 und 3 µm.

Die Erzeugung einer zweiten Schutzschicht auf der Oberfläche der umgeformten Blechteile führt zur gewünschten Witterungs- und Korrosionsbeständigkeit.

Der Sol-Gel-Lack ist bevorzugt ein aus einer alkoholischen Silan-Lösung, vorzugsweise einer Alkoxysilan-Lösung, und einer wässrigen kolloidalen Kieselsäure-Lösung hergestelltes Polysiloxan und besteht insbesondere aus vernetzten anorganischen Polysiloxanen mit über Kohlenstoffbindungen mit dem Silizium verbundenen organischen Gruppen, insbesondere Alkylgruppen. Polysiloxan ist dabei der Begriff für Polymere aus vernetzten Siloxanen.

Als Bandmaterial für die Herstellung der Umformteile kann handelsübliches Aluminium mit einer Reinheit von 98,3% und höher verwendet werden, je nach den an die Oberflächenqualität gestellten Anforderungen z.B. Aluminium mit einer Reinheit von 99,0% und höher, fallweise auch mit einer Reinheit von 99,5%. In besonders gelagerten Fällen kann auch eine Reinheit von 99,8% und höher angezeigt sein. Neben Aluminium der genannte Reinheiten können auch Aluminiumlegierungen eingesetzt werden. Bevorzugte Legierungen sind diejenigen der Reihen AA 1000, AA 3000 und AA 5000. Weitere in Frage kommende Legierungen enthalten beispielsweise 0,25 bis 5 Gew.-%, insbesondere 0,5 bis 4 Gew.-% Magnesium oder 0,2 bis 2 Gew.-% Mangan, oder 0,5 bis 5 Gew.-% Magnesium und 0,2 bis 2 Gew.-% Mangan, insbesondere 1 Gew.-% Magnesium und 0,5 Gew.-% Mangan, oder 0,1 bis 12 Gew.-%, vorzugsweise 0,1 bis 5 Gew.-% Kupfer, oder 0,5 bis 6 Gew.-% Zink und 0,5 bis 5 Gew.-% Magnesium, oder 0,5 bis 6 Gew.-% Zink, 0,5 bis 5 Gew.-% Magnesium und 0,5 bis 5 Gew.-% Kupfer, 0,5 bis 2 Gew.-% Eisen und 0,2 bis 2 Gew.-% Mangan, insbesondere 1,5 Gew.-% Eisen und 0,4 Gew.-% Mangan, oder AlMgSi- oder AlFeSi-Legierungen. Weitere Beispiele sind AlMgCu-Legierungen, wie AlMg0,8Cu oder AlMg-Legierungen, wie AlMg1, oder AlFeMn-Legierungen wie AlFeMn1,5.

Die Blechteile können beispielsweise durch Biegen, Tiefziehen, Kaltfliesspressen oder Rollumformen, aber auch über andere Umformverfahren geformt werden.

Die Vorbehandlungsschicht kann beispielsweise eine durch Chromatierung, Phosphatierung oder durch anodische Oxidation erzeugte Schicht sein. Vorzugsweise ist die Vorbehandlungsschicht aus anodisch oxidiertem Aluminium.

Die Vorbehandlungsschicht kann eine Dicke von beispielsweise wenigstens 10 nm, vorzugsweise von wenigstens 20 nm, insbesondere von wenigstens 50 nm und vorteilhaft von wenigstens 100 nm aufweisen. Die maximale Dicke der Vorbehandlungsschicht beträgt beispielsweise 5000 nm, vorzugsweise 1500 nm und insbesondere 300 nm.

Die Vorbehandlungsschicht ist bevorzugt eine anodisch erzeugte Oxidschicht, die in einem nicht rücklösenden oder in einem rücklösenden Elektrolyten aufgebaut wurde. Die Vorbehandlungsschicht ist vorzugsweise eine poröse, anodisch erzeugte Oxidschicht.

Die Anodisation findet vorzugsweise in einem sauren Elektrolyten aus der Reihe der Phosphorsäure-, Zitronensäure-, Weinsäure-, Chromsäureelektrolyte und insbesondere aus der Reihe der Schwefelsäureelektrolyte statt. Die Anodisation erfolgt im Wechsel- oder im Gleichstromverfahren.

Die Vorbehandlungsschicht kann auch eine Gelbchromatierschicht, eine Grünchromatierschicht, eine Phosphatschicht oder eine chromfreie Vorbehandlungsschicht, die in einem wenigstens eines der Elemente Ti, Zr, F, Mo oder Mn enthaltenden Elektrolyten ausgebildet worden ist, enthalten.

Ferner kann die Aluminiumoberfläche zur Vorbehandlung in einem chemischen oder elektrochemischen Verfahren geglänzt oder einem alkalischen Beizprozess unterzogen werden. Solche Glänz- oder Beizverfahren werden vor dem Anodisieren durchgeführt.

Vor dem Auftrag einer Vorbehandlungsschicht oder Durchführung erster Vorbehandlungsschritte wird die Bandoberfläche zweckmässigerweise entfettet und gereinigt. Die Vorbehandlung kann auch lediglich ein Entfetten und Reinigen der Bandoberfläche beinhalten. Die Reinigung der Bandoberfläche kann auf an sich bekannte Weise, z.B. chemisch und/oder elektrochemisch und sauer oder alkalisch, erfolgen. Sie bezweckt die Entfernung von Fremdsubstanzen und gegebenenfalls der natürlich entstanden Oxidschicht auf der Aluminiumoberfläche. Als Reinigungsmittel eignen sich z.B. saure, wässrige Entfettungsmittel, alkalische Entfettungsmittel auf der Basis von Polyphosphat und Borat. Eine Reinigung mit mässigem bis starkem Materialabtrag bildet das Beizen oder Ätzen mittels stark alkalischen oder sauren Beizlösungen, wie z.B. Natronlauge oder ein Gemisch aus Salpetersäure und Flusssäure. Dabei wird die vorhandene Oxidschicht samt ihren Verunreinigungen entfernt. Bei stark angreifenden alkalischen Beizen ist gegebenenfalls eine saure Nachbehandlung notwendig.

Mit an sich bekannten elektrochemischen, chemischen oder mechanischen Glänzverfahren kann ebenfalls eine Reinigung der Bandoberfläche erzielt werden. Durch den Glänzvorgang kann zudem das optische Erscheinungsbild der Bandoberfläche am Endprodukt beeinflusst werden.

Im Rahmen des erfindungsgemässen Verfahrens kann bei einer bevorzugten Ausführung die Vorbehandlungsschicht beispielsweise unter Einhaltung der folgenden Verfahrensbedingung auf das Aluminiumband aufgebracht werden:

a) Entfetten bei pH 9 - 9,5 bei ca. 50°C,

b) Spülen mit Leitungswasser (Raumtemperatur),

c) Elektrochemisches Glänzen,

d) Spülen mit Leitungswasser (Raumtemperatur),

e) Anodisieren in 20% $H_2SO_4$ bei ca. 25°C und 20V Spannung,

f) Spülen in Leitungswasser bei ca. 50°C und

g) Spülen in entionisiertem Wasser bei ca. 85°C.

Das Aluminiumband durchläuft die verschiedenen Behandlungsbäder kontinuierlich mit einer Geschwindigkeit von beispielsweise 40 m/min.

Auf die Vorbehandlungsschicht können anschliessend die Schutzschicht und gegebenenfalls weitere Schichten aufgebracht werden.

Der auf die Vorbehandlungsschicht aufgetragene Sol-Gel-Lack ist bevorzugt ein aus einer alkoholischen Silan-Lösung, insbesondere einer Alkoxysilan-Lösung, und einer kolloidalen Kieselsäure-Lösung hergestelltes Polysiloxan. Das Polysiloxan wird insbesondere durch eine Kondensationsreaktion zwischen hydrolysierten und vernetzbaren Silanen, insbesondere Alkoxysilanen, und kolloidaler Kieselsäure erzeugt.

Die Kondensationsreaktion zwischen hydrolisierten Silanen, insbesondere Alkoxysilanen, untereinander sowie hydrolisierten Silanen, insbesondere Alkoxysilanen, und kolloidaler Kieselsäure führt zur Ausbildung eines anorganischen Netzwerkes von Polysiloxanen. Gleichzeitig werden organische Gruppen, insbesondere Alkylgruppen bzw. einfache Alkylgruppen über Kohlenstoffbindungen in das anorganische Netzwerk eingebaut. Die organischen Gruppen, bzw. die Alkyl-Gruppen, nehmen jedoch nicht direkt an der Polymerisation bzw. der Vernetzung der Siloxane teil, d.h. sie dienen nicht zur Ausbildung eines organischen Polymersystems sondern lediglich zur Funktionalisierung. Die Funktion liegt darin, dass die organischen Gruppen, insbesondere die Alkyl-Gruppen, während des Sol-Gel-Prozesses an den Aussenseiten der Polysiloxane angehängt werden und dadurch eine gegen aussen wasserabstossende Lage ausbilden, welche dem Sol-Gel-Lack eine ausgeprägte hydrophobe Eigenschaft verleiht.

Der beschriebene Sol-Gel-Prozess führt, wie erwähnt, durch gezielte Hydrolyse und Kondensation von Alkoxiden des Siliziums und Kieselsäure zu einem Sol-Gel-Lack aus einem anorganischen Netzwerk mit eingebauten Alkylgruppen. Die dadurch erhaltenen Polysiloxane sind deshalb eher den anorganischen Polymeren einzuordnen.

Bei der Herstellung einer bevorzugten Ausführung eines Sol-Gel-Lackes als Schutzschicht wird zweckmässigerweise von zwei Basislösungen A und B ausgegangen.

Die Lösung A ist eine alkoholische Lösung eines oder mehrerer verschiedener Alkoxysilane, wobei die Alkoxysilane in einem wasserfreien Medium in nicht hydrolisierter Form vorliegen. Als Lösungsmittel wird zweckmässig ein Alkohol, wie beispielsweise Methyl-, Ethyl-, Propyl- oder Butylalkohol und bevorzugt Isopropylalkohol, verwendet.

Die Alkoxysilane werden durch die allgemeine Formel $X_nSi(OR)_{4-n}$ beschrieben, in welcher "R" ein einfaches Alkyl ist, vorzugsweise aus der Gruppe umfassend Methyl, Ethyl, Propyl und Butyl. "X" ist zweckmässig ebenfalls ein Alkyl, vorzugsweise aus der Gruppe umfassend Methyl, Ethyl, Propyl und Butyl. Zweckmässige Alkoxysilane sind beispielsweise Tetramethoxysilane (TMOS) und bevorzugt Tetraethoxysilan (TEOS) und Methyltrimethoxysilan (MTMOS) und weitere Alkoxysilane.

In besonders bevorzugter Ausführungsform wird die Lösung A aus Tetraethoxysilan (TEOS) und/oder Methyltrimethoxysilan (MTMOS) mit einem Methyl-, Ethyl- oder Propyl-Alkohol und insbesondere mit einem Isopropylalkohol als Lösungsmittel zubereitet. Die Lösung A kann z.B. 25 - 35 Gew.-%, insbesondere 30 Gew.-%, TEOS und 15 - 25 Gew.-%, insbesondere 20 Gew.-%, MTMOS enthalten, beides gelöst in 40 - 60 Gew.-%, insbesondere 50 Gew.-%, Isopropylalkohol.

Die Lösung B enthält in Wasser gelöste kolloidale Kieselsäure. In zweckmässiger Ausführung wird die Lösung B mittels Säure, vorzugsweise mittels Salpetersäure ($HNO_3$), auf einen pH-Wert zwischen 2,0 - 4, vorzugsweise zwischen 2,5 - 3,0 und insbesondere von 2,7 eingestellt.

Die verwendete Kieselsäure ist zweckmässig eine in saurem Milieu stabilisierte Kieselsäure, wobei der pH-Wert der Kieselsäure vorteilhaft bei 2 - 4 liegt. Die Kieselsäure ist vorteilhaft möglichst alkaliarm. Der Alkaligehalt (z.B. $Na_2O$) der Kieselsäure liegt bevorzugt unter 0,04 Gew.-%.

Die Lösung B enthält beispielsweise 70 - 80 Gew.-%, insbesondere 75 Gew.-%, Wasser als Lösungsmittel und 20 - 30 Gew.-%, insbesondere 25 Gew.-%, kolloidale Kieselsäure. Die Lösung B ist zweckmässig mittels Salpetersäure ($HNO_3$) auf einen pH-Wert zwischen 2,0 - 3,5, vorzugsweise zwischen 2,5 - 3,0, und insbesondere von 2,7 eingestellt. Eine bevorzugte Kieselsäure-Lösung wird beispielsweise durch die Firma Nissan Chemical Industries Ltd. mit dem Produktname "SNOWTEX® O" vertrieben.

Das Zusammenführen und Mischen der beiden Basislösungen A und B führt in Gegenwart der Salpetersäure zu einer Hydrolysereaktion zwischen dem in Lösung B enthaltenen Wasser und den in Lösung A enthaltenen Alkoxysilanen.

$$\text{Hydrolysereaktion: } Si(OR)_n + nH_2O \rightarrow Si(OH)_n + nR(OH)$$

Gleichzeitig tritt eine Kondensationsreaktion ein, bei der unter Wasserabspaltung aus jeweils zwei Si-OH-Gruppen eine Siloxan-Bindung (Si-O-Si) aufgebaut wird. Durch fortschreitende Polymerisation entsteht dabei ein Netzwerk von Polysiloxanen, an welche Alkyl-Gruppen angegliedert sind. Die neue Mischlösung liegt in einem gelförmigen Zustand vor. Die beiden Lösungen A und B werden bevorzugt in einem Gewichtsverhältnis von 7 : 3 Teilen gemischt.

Der Sol-Gel-Lack wird zweckmässigerweise in Gel-Form auf die Oberfläche des Aluminiumbandes aufgetragen und anschliessend getrocknet bzw. gehärtet.

Die kontinuierliche Beschichtung zur Erzeugung der ersten Schutzschicht erfolgt im Bandlackierungsverfahren, auch Coil-Coating-Verfahren genannt. Ein typisches Coil-Coating-Verfahren ist ein Walzenauftragverfahren mit zwei oder drei Walzen.

Der Trocknungsprozess besteht darin, die im Sol-Gel-Lack verbleibenden Wasser und Alkohole auszutreiben, wodurch der Sol-Gel-Lack aushärtet und eine witterungsbeständige und korrosionsfeste Schutzschicht auf der Bandoberfläche entsteht.

Das mit dem Sol-Gel-Lack beschichtete Band wird zweckmässigerweise mittels Strahlung, wie UV-Strahlung, Elektronenstrahlung, Laserstrahlung, oder mittels Wärmestrahlung, wie IR-Strahlung, oder mittels Konvektionserwärmung oder einer Kombination der vorgenannten Trockungs- bzw. Härtungsverfahren, getrocknet resp. gehärtet.

Die an der Bandoberfläche gemessene Temperatur zur Trockung bzw. Härtung des Sol-Gel-Lackes ist zweckmässig grösser als 60° C, vorzugsweise grösser als 150° C und insbesondere grösser als 200° C. Die erhöhte Temperatur ist ferner zweckmässigerweise kleiner als 400°C, vorzugsweise kleiner als 350°C und insbesondere kleiner als 300°. Die Temperatur liegt besonders bevorzugt zwischen 250°C und 300°C. Bei der Temperaturangabe handelt es sich um eine sogenannte "Peak Metal Temperature" (PMT).

Die erhöhte Temperatur kann beispielsweise während 5 Sekunden bis 2 Minuten auf das Band einwirken. Der Sol-Gel-Lack wird während einer Zeit von vorzugsweise weniger als 90 Sekunden, insbesondere von weniger als 60 Sekunden, und von vorzugsweise mehr als 10 Sekunden, insbesondere von mehr als 30 Sekunden getrocknet bzw. gehärtet. Bei Einsatz von IR-Strahlung liegen die Trockungszeiten eher im unteren Bereich der angegebenen Aufenthaltszeiten.

Die Konvektionserwärmung kann zweckmässig durch eine Beaufschlagung mit erwärmten Gasen, wie Luft, Stickstoff, Edelgase oder Gemischen daraus, erfolgen. Die Sol-Gel-Lackschicht wird in einem Durchlaufofen getrocknet.

Das mit der ersten Schutzschicht versehene Band wird beispielsweise durch Rollumformen weiterverarbeitet, die Blechteile werden abgelängt und gegebenenfalls einem weiteren Umformschritt unterzogen. Bei einer Variante des Verfahrens werden zuerst Blechteile aus dem mit der ersten Schutzschicht versehenen Band geschnitten bzw. ausgestanzt und die ausgeschnittenen Blechteile werden dann umgeformt.

Die umgeformten Blechteile werden anschliessend zur Erzeugung der zweiten Schutzschicht mit einem Sol-Gel-Lack aus einem Polysiloxan lackiert und nachfolgend zum Trocknen und Härten der zweiten Schutzschicht in einen Ofen überführt. Bevorzugt erfolgt das Trocknen und Härten der zweiten Schutzschicht ebenfalls in einem Durchlaufofen.

Der Lackauftrag kann mit beliebigen Verfahren erfolgen. Bevorzugt wird das Spritzlackieren.

Das Trocknen und Härten der zweiten Schutzschicht erfolgt bevorzugt unter den gleichen Verfahrensbedingungen wie das vorstehend beschriebene Trocknen und Härten der ersten Schutzschicht.

Die nach dem erfindungsgemässen Verfahren hergestellten Umformteile weisen dank der harten und eine ausgezeichnete Haftung aufweisenden Schutzschicht eine gute Schutzwirkung gegen Witterungseinflüsse, Korrosion und mechanischen Abrieb auf und zeichnen sich durch eine gute UV-Beständigkeit aus.

Die erfindungsgemäss hergestellten Umformteile verfügen dank der Sol-Gel-Schutzschicht aus Polysiloxanen über eine hohe Oberflächenhärte. Die Sol-Gel-Schutzschicht weist zweckmässigerweise eine nach der Methode "Bleistiftverfahren nach Wolff-Wilburn" nach DIN 55350 Teil 18 gemessene Härte von grösser "f", vorzugsweise von grösser "h", insbesondere von grösser "2h" und vorteilhaft von grösser "3h" auf, wobei grösser im Sinne von härter zu verstehen ist.

Die Sol-Gel-Schicht zeichnet sich zudem durch eine ausgezeichnete Haftung auf den umgeformten Blechteilen aus.

Nachfolgend wird anhand eines Beispiels die Zubereitung und Herstellung einer besonders bevorzugten Ausführung eines Sol-Gel-Lackes beschrieben. Dazu werden eine Lösung A und eine Lösung B vorbereitet.

| Lösung A enthält: | |
|---|---|
| 50 Gew.-% | Isopropylalkohol |
| 30 Gew.-% | Tetraethoxysilan (TEOS) |
| 20 Gew.-% | Methyltrimethoxysilan (MTMOS) |

| Lösung B enthält: | |
|---|---|
| 75 Gew.-% | Wasser |
| 25 Gew.-% | Kolloidale Kieselsäure |

Der pH-Wert der Lösung B ist unter Zugabe einer Säure, insbesondere Salpetersäure ($HNO_3$), auf ca. 2,7 eingestellt.

Die Herstellung des Sol-Gel-Lackes und die Beschichtung des Aluminiumbandes erfolgt in bevorzugter Ausführung wie folgt:

Einer Basislösung A, wie zuvor beschrieben, in einem Anteil von 70 Gew.-% der Mischlösung wird unter Rühren eine Lösung B in einem Anteil von 30 Gew.-% der Mischlösung zugegeben. Die Lösungen A und B werden unter kontinuierlichem Rühren in eine Mischlösung überführt, wobei reaktionsbedingt Wärme freigesetzt wird.

Die Mischlösung wird über eine bestimmte Zeit, beispielsweise während 1 h bis 10 h, vorzugsweise während 4 bis 8 h, insbesondere während rund 6 h gerührt. Das Gemisch wird anschliessend filtriert. Der Filter dient dem Rückhalt grösserer Partikel, wie z.B. Partikel von kolloidaler Kieselsäure. Der Porendurchmesser bzw. die Maschenweite des Filters richtet sich nach der angestrebten Schichtdicke, da Partikel mit grösserem Durchmesser als die angestrebte Schichtdicke die Oberflächenqualität der Schutzschicht beeinträchtigen. Die Filtration kann beispielsweise mittels Polypropylenfilter mit einer Porosität von 1 µm erfolgen.

Die Mischlösung wird zweckmässig auf einem pH-Wert von 2 - 4, vorzugsweise von 2 bis 3,5, insbesondere von 2,5 bis 3, und besonders bevorzugt von 2,7, gehalten. Die Angleichung des pH-Wertes erfolgt mittels Säure, bevorzugt mittels Salpetersäure.

Nach Abschluss des Rührvorganges kann der Sol-Gel-Lack mittels eines der vorgenannten Verfahrens auf die Bandoberfläche aufgetragen und nachfolgend, wie vorgängig beschrieben, getrocknet bzw. gehärtet werden.

In vorteilhafter Ausführung des Herstellungsverfahrens wird der Sol-Gel-Lack nach seiner Herstellung und vor dem Auftrag auf die Bandoberfläche während weniger Minuten bis mehreren Stunden, vorzugsweise zwischen 1 und 24 h, insbesondere zwischen 12 und 22 h und besonders bevorzugt während rund 17 h ruhig gestellt.

Die Elementanalyse des ausgehärteten Sol-Gel-Lackes mittels XPS (X-Ray Photoelectron Spectroscopy) weist z.B. die Elemente Sauerstoff, Silizium und rund 5 - 20 at.% (Atomprozente) Kohlenstoff nach.

## Patentansprüche

1. Verfahren zur Herstellung witterungs- und korrosionsbeständiger umgeformter Blechteile aus Aluminium oder aus einer Aluminiumlegierung mit dekorativer Oberfläche unter Anwendung eines Coil-Coating-Verfahrens, umfassend nacheinander die Schritte:

   - Bereitstellen eines Bandes aus Aluminium oder aus einer Aluminiumlegierung,
   - gegebenenfalls kontinuierliches Entfetten des Bandes,
   - gegebenenfalls elektrochemisches, chemisches oder mechanisches Glänzen des gegebenenfalls entfetteten Bandes,
   - kontinuierliche Vorbehandlung des gegebenenfalls entfetteten und/oder geglänzten Bandes zur Erzeugung einer als Haftgrund für eine Lackschicht geeigneten Vorbehandlungsschicht,
   - kontinuierliches Lackieren des vorbehandelten Bandes mit einem Sol-Gel-Lack aus einem Polysiloxan zur Erzeugung einer ersten Schutzschicht,
   - kontinuierliches Trocknen und Härten der ersten Schutzschicht in einem Durchlaufofen,
   - Fertigung der Blechteile durch

     a. Umformen des mit der ersten Schutzschicht versehenen Bandes und Ablängen der gegebenenfalls weiter umzuformenden Blechteile oder
     b. Schneiden der Blechteile aus dem mit der ersten Schutzschicht versehenen Band und Umformen der ausgeschnittenen Blechteile,

   - Lackieren der umgeformten Blechteile mit einem Sol-Gel-Lack aus einem Polysiloxan zur Erzeugung einer zweiten Schutzschicht,
   - Trocknen und Härten der zweiten Schutzschicht in einem Ofen.

2. Verfahren nach Anspruch 1, **dadurch gekennzeichnet, dass** die Dicke der ersten Schutzschicht wenigstens 1 µm beträgt und bevorzugt zwischen 1 und 10 µm, insbesondere zwischen 1 und 4,5 µm und besonders bevorzugt zwischen 1 und 3 µm liegt.

3. Verfahren nach Anspruch 1, **dadurch gekennzeichnet, dass** die Dicke der zweiten Schutzschicht wenigstens 0,5 µm beträgt und bevorzugt zwischen 0,5 und 3 µm liegt.

4. Verfahren nach einem der Ansprüche 1 bis 3, **dadurch gekennzeichnet, dass** der Sol-Gel-Lack ein aus einer alkoholischen Silan-Lösung, vorzugsweise einer Alkoxysilan-Lösung, und einer wässrigen kolloidalen Kieselsäure-Lösung hergestelltes Polysiloxan ist.

5. Verfahren nach einem der Ansprüche 1 bis 4, **dadurch gekennzeichnet, dass** der Sol-Gel-Lack aus vernetzten anorganischen Polysiloxanen mit über Kohlenstoffbindungen mit dem Silizium verbundenen organischen Gruppen, insbesondere Alkylgruppen, besteht.

6.  Verfahren nach einem der Ansprüche 1 bis 5, **dadurch gekennzeichnet, dass** als Band ein Glänzwerkstoff oder ein Werkstoff mit einer matten dekorativen Oberfläche eingesetzt wird.

7.  Verfahren nach einem der Ansprüche 1 bis 6, **dadurch gekennzeichnet, dass** als Vorbehandlungsschicht auf der Bandoberfläche eine anodische Oxidschicht erzeugt wird.

8.  Verfahren nach Anspruch 7, **dadurch gekennzeichnet, dass** die anodische Oxidschicht eingefärbt wird.

9.  Verfahren nach einem der Ansprüche 1 bis 6, **dadurch gekennzeichnet, dass** als Vorbehandlungsschicht auf der Bandoberfläche eine Chromatschicht erzeugt wird.

10. Verfahren nach einem der Ansprüche 1 bis 6, **dadurch gekennzeichnet, dass** als Vorbehandlungsschicht auf der Bandoberfläche eine chromfreie Schicht erzeugt wird.

11. Verfahren nach einem der Ansprüche 1 bis 10, **dadurch gekennzeichnet, dass** der Sol-Gel-Lack Farbpigmente enthält.

12. Verfahren nach einem der Ansprüche 1 bis 11, **dadurch gekennzeichnet, dass** die umgeformten Blechteile als dekorative Teile, insbesondere als Zierteile wie Zierleisten im Automobilbau verwendet werden.

**Claims**

1.  Method of producing weather-resistant and corrosion-resistant formed sheet-metal parts of aluminium or an aluminium alloy with a decorative surface using a coil-coating process, including the following sequence of steps:

    -   providing a strip of aluminium or an aluminium alloy,
    -   optionally continuously degreasing the strip,
    -   optionally electrochemically, chemically or mechanically brightening the optionally degreased strip,
    -   continuously pre-treating the optionally degreased and/or brightened strip in order to produce a pre-treatment layer suitable as a base for a lacquer layer,
    -   continuously coating the pre-treated strip with a sol-gel lacquer consisting of a polysiloxane in order to produce a first protective layer,
    -   continuously drying and hardening the first protective layer in a continuous oven,
    -   producing the sheet-metal parts by

        a. forming the strip provided with the first protective layer and cutting the sheet-metal parts optionally to be formed further to length or
        b. cutting the sheet-metal parts out of the strip provided with the first protective layer and forming the sheet-metal parts cut out,

    -   coating the formed sheet-metal parts with a sol-gel lacquer consisting of a polysiloxane in order to produce a second protective layer and
    -   drying and hardening the second protective layer in an oven.

2.  Method according to claim 1, **characterised in that** the thickness of the first protective layer is at least 1 μm and is preferably between 1 and 10 μm, in particular between 1 and 4.5 μm and particularly preferably between 1 and 3 μm.

3.  Method according to claim 1, **characterised in that** the thickness of the second protective layer is at least 0.5 μm and is preferably between 0.5 and 3 μm.

4.  Method according to one of claims 1 to 3, **characterised in that** the sol-gel lacquer is a polysiloxane produced from an alcoholic silane solution, preferably an alkoxysilane solution, and an aqueous colloidal silica solution.

5.  Method according to one of claims 1 to 4, **characterised in that** the sol-gel lacquer consists of crosslinked inorganic polysiloxanes with organic groups, in particular alkyl groups, bonded to the silicon by way of carbon bonds.

6. Method according to one of claims 1 to 5, **characterised in that** a bright-finish material or a material with a matt decorative surface is used as the strip.

7. Method according to one of claims 1 to 6, **characterised in that** an anodic oxide layer is produced on the strip surface as the pre-treatment layer.

8. Method according to claim 7, **characterised in that** the anodic oxide layer is coloured.

9. Method according to one of claims 1 to 6, **characterised in that** a chromate layer is produced on the strip surface as the pre-treatment layer.

10. Method according to one of claims 1 to 6, **characterised in that** a chromium-free layer is produced on the strip surface as the pre-treatment layer.

11. Method according to one of claims 1 to 10, **characterised in that** the sol-gel lacquer contains pigments.

12. Method according to one of claims 1 to 11, **characterised in that** the formed sheet-metal parts are used as decorative parts, in particular as trim, such as trim strips, in car construction.


**Revendications**

1. Procédé de préparation de pièces de tôle formées, résistant aux intempéries et à la corrosion, en aluminium ou en un alliage d'aluminium, avec surface décorative, en utilisant un procédé Coil-Coating, comprenant les étapes successives :

   - préparation d'une bande en aluminium ou en un alliage d'aluminium,
   - le cas échéant, dégraissage continu de la bande,
   - le cas échéant, polissage électrochimique, chimique ou mécanique de la bande le cas échéant dégraissée,
   - prétraitement continu de la bande le cas échéant dégraissée et/ou polie, pour produire une couche de prétraitement appropriée comme base d'adhérence pour une couche de laque,
   - laquage continu de la bande prétraitée avec une laque sol-gel en un polysiloxane pour produire une première couche de protection,
   - séchage continu et durcissement de la première couche protectrice dans un four de passage continu,
   - achèvement de la tôle par

      a. formage de la bande munie de la première couche protectrice et mise à longueur de la pièce de tôle le cas échéant, encore à former,
      b. découpe de la pièce de tôle depuis la bande munie de la première couche de protection et formage de la pièce de tôle découpée,

   - laquage de la pièce de tôle formée avec une laque sol-gel en un polysiloxane, pour produire une deuxième couche de protection,
   - séchage et durcissament de la deuxième couche de protection dans un four.

2. Procédé selon la revendication 1, **caractérisé en ce que** l'épaisseur de la première couche de protection s'élève à au moins 1 μm et se situe de préférence, dans l'intervalle allant de 1 à 10 μm, en particulier de 1 à 4,5 μm et de manière particulièrement préférée, de 1 à 3 μm.

3. Procédé selon la revendication 1, **caractérisé en ce que** l'épaisseur de la deuxième couche de protection s'élève à au moins 0,5 μm et se situe de préférence, dans l'intervalle allant de 0,5 à 3 μm.

4. Procédé selon l'une quelconque des revendications 1 à 3, **caractérisé en ce que** la laque sol-gel est un polysiloxane préparé à partir d'une solution alcoolique de silane, de préférence une solution d'alcoxysilane, et une solution aqueuse colloïdale d'acide silicique.

**5.** Procédé selon l'une quelconque des revendications 1 à 4, **caractérisé en ce que** la laque sol-gel consiste en des polysiloxanes inorganiques réticulés, avec des groupes organiques liés au silicium par des liaisons carbone, en particulier des groupes alkyle.

**6.** Procédé selon l'une quelconque des revendications 1 à 5, **caractérisé en ce que** l'on met en oeuvre comme bande, un outil poli ou un outil avec une surface décorative matte.

**7.** Procédé selon l'une quelconque des revendications 1 à 6, **caractérisé en ce que** comme couche de prétraitement, on produit sur la surface de la bande, une couche d'oxyde anodique.

**8.** Procédé selon la revendication 7, **caractérisé en ce que** la couche d'oxyde anodique est colorée.

**9.** Procédé selon l'une quelconque des revendications 1 à 6, **caractérisé en ce que** comme couche de prétraitement, on produit sur la surface de la bande, une couche de chromate.

**10.** Procédé selon l'une quelconque des revendications 1 à 6, **caractérisé en ce que** comme couche de prétraitement, on produit sur la surface de la bande, une couche exempte de chrome.

**11.** Procédé selon l'une quelconque des revendications 1 à 10, **caractérisé en ce que** la laque sol-gel contient un pigment coloré.

**12.** Procédé selon l'une quelconque des revendications 1 à 11, **caractérisé en ce que** la pièce de tôle formée est utilisée comme pièce décorative, en particulier comme pièce décorative comme des ornements collés dans l'industrie automobile.